# EUROPEAN PATENT SPECIFICATION

(11) **EP 2 417 204 B1**
(45) Date of publication and mention of the grant of the patent: **26.02.2014**
(21) Application number: 10716311.5
(22) Date of filing: 07.04.2010
(51) Int. Cl.: C09D 11/00

(54) **PIEZOCHROMIC SECURITY ELEMENT**
PIEZOCHROMES SICHERHEITSELEMENT
ELEMENT PIÉZOCHROME DE SÉCURITÉ

(30) Priority: 07.04.2009 WO PCT/IB2009/005198
(43) Date of publication of application: 15.02.2012
(73) Proprietor: SICPA HOLDING SA, 1008 Prilly (CH); Bank Of Canada Department Of Banking Operations, Ottawa, ON K1A 0G9 (CA)
(72) Inventor: KRUEGER, Jessica, CH-1073 Savigny (CH); DEGOTT, Pierre, CH-1023 Crissier (CH); MACPHERSON, Charles, Santa Barbara CA 93111 (US); DESPLAND, Claude-Alain, CH-1008 Prilly (CH); SCHMID, Mathieu, CH-1005 Lausanne (CH)
(74) Representative: HOFFMANN EITLE
(86) International application number: PCT/EP2010/054597
(87) International publication number: WO 2010/115928

(56) References cited:
- WO-A1-03/014228
- WO-A1-2008/110317
- FR-A1- 2 698 390
- US-A- 5 760 155
- US-A1- 2002 077 397

## Description

### Field of invention

The present invention is in the field of security documents. In particular it is about a reversibly pressure-sensitive device which can be incorporated into, or affixed onto, or printed onto a security document, and which exhibits a visible color change under a moderate applied pressure, such as can be produced by a human finger.

### State of the art

Piezochromic devices, which reversibly change color with applied pressure, are known in the art. EP-A 0 530 369 (Myashita) discloses an indolinospirobenzothiopyran derivative which is obtained as microfine orange-red crystals. Upon application of moderate pressure - rubbing of the surface of a coating comprising them -, these crystals turn into a brilliant deep blue, and remain so until they are exposed to visible light, where upon they turn back to their initial orange color.

WO-A 03/089227 (Lutz) discloses an application of piezochromic materials as pressure indicator in the cover layer of a roll used in a papermaking machine.

WO-A 2005/092995 (Leroux) is about a reversible piezochromic system which can be applied in the form of a printing ink, e.g. to protect banknotes from forgery. The system comprises the combination of an electron donating compound and an electron accepting compound. The electron donating compound is a ionochromic substance, in this case a pH-sensitive dye. The electron accepting compound must exhibit acidity high enough to develop the color of the ionochromic compound when brought in contact with the latter, but low enough to allow for the reversibility of the color change. Both types of compounds are combined in a coating composition and applied to a substrate. Upon application of pressure or friction, a strong color develops, which fades away within a minute or two.

The principal disadvantage of the system of WO-A 2005/092995 in security printing applications is the considerable time it takes the system to revert to its original state after the application of pressure and the concomitant color change. A piezochromic system exhibiting rapid reversible color change with pressure, in both directions, would be highly desirable.

### Summary of the invention

The present inventors have now surprisingly found that a fully reversible, rapidly reacting piezochromic device, useful for application as a security element on value documents, banknotes, etc., can be realized on the basis of a different physical, noteworthy a mechanical principle.

The reversibly piezochromic security element of the present invention is based on a collection of optically contrasting pigment particles, comprised in a film or a coating layer of an elastic polymer.

The present invention discloses as well a coating composition for the production of a reversibly piezochromic security element, comprising a collection of optically contrasting pigment particles in a liquid or pasty polymerizable precursor monomer or oligomer, able to be cured to an elastic solid.

In the so obtained elastic solid, upon compression or elongation of the elastic polymer, the density and/or the orientation of the pigment particles changes; this results in a visible color change, given the optically contrasting property of the pigment particles. Said visible color change in response to compression or elongation is reversible, in that, upon release of the external pressure, the arrangement of the pigment particles in said elastic polymer reverts to its initial state. The visible color effect can be perceived either in the vicinity of the pressure exerting tool, or from the back side of the device if the back side is visibly transparent, or else through the pressure exerting tool, if this latter is visibly transparent.

The collection of optically contrasting pigment particles, in the present context, means any kind of pigment particles or any mixture of pigment particles which are visible within the elastic polymer. The pigment does not necessarily need to be of a same single type; the collection of pigment particles may thus comprise various types of pigments, noteworthy one or more parts of pigments chosen from the following, preferred options.

Preferred pigment particles are of non-spherical shape, in particular they are needle-shaped or plate- or flake-shaped particles.

Most preferred pigments for embodying this invention are the thin-film interference pigments, in particular the optically variable pigments disclosed in US 4,705,300; US 4,705,356; US 4,721,271 and in the thereto related documents. These pigments comprise a Fabry-Pérot reflector / dielectric / absorber layer structure, wherein the reflector is preferably of a metal, such as aluminium, chromium, nickel, or a metal alloy. The dielectric is preferably of magnesium fluoride (MgF₂) or of silicon dioxide (SiO₂), and the absorber is preferably of chromium, nickel, or carbon.

The preferred flakes for embodying the invention have a diameter between 10 and 50 micrometers.

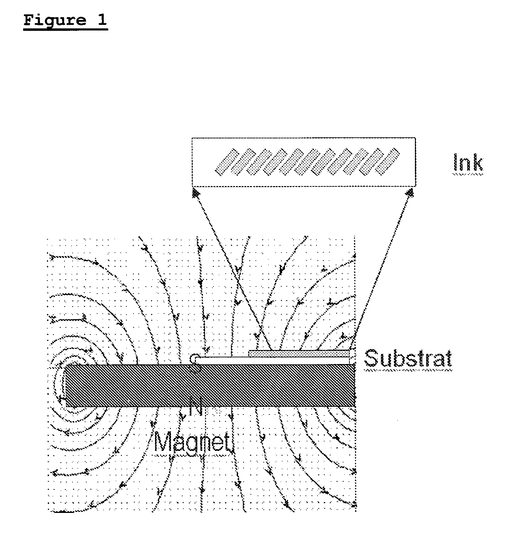

The needle-shaped or the plate- or flake-shaped particles are preferably comprised within the elastic polymer in an oriented state; such orientation can be effectuated through the application of corresponding shear forces, such as disclosed in DE 196 39 165 C2. Alternatively, the pigment particles can be oriented through the application of external fields, e.g. magnetic fields such as disclosed in EP 1 641 624 and in WO 2008/046702 A1. To this aim, the pigment particles need to be responsive to the chosen external fields. Fig. 1 schematically shows how the pigment particles in the coating can be oriented.

The preferred pigment particles for embodying the invention are selected from the magnetic or magnetizable pigment particles.

The pigment is present in the elastic polymer in a concentration of between 5 and 20 wt-%, preferably of between 10 and 15 wt-%.

In the most preferred embodiment, the pigment particles, preferably pigment flakes, are about vertically oriented with respect to the plane of the coating. "Vertically", in the context of the present disclosure, means that the needle-axis of needle-shaped particles is within 30° from the normal to the plane, respectively that the flake-axis of flake-shaped particles is within 30° from the plane of the film or coating.

The elastic polymer is obtained through the polymerization of an appropriate precursor monomer or oligomer. A liquid or pasty coating composition is formed by dispersing the pigment particles and adequate additives in the polymerizable precursor. The coating composition is applied to a substrate in the form of a film, using an appropriate coating or printing technique, to produce, if so desired, an as well a determined orientation of the pigment particles. The applied coating composition is subsequently cured (hardened) to yield an elastic material comprising the pigment particles. The resulting film is useful as a piezochromic security device.

In a preferred embodiment, the surface of the piezochromic security device is additionally covered by an at least partially transparent protecting film, to prevent accidental mechanical damages. A preferred protecting film is a transparent polymer foil. The protecting film can, however, also be any other type of protecting coating, such as a UV-varnish or the like.

In a further embodiment of the piezochromic security device, the film of elastic polymer containing the pigment particles is comprised between two at least partially transparent protecting films.

A particularly preferred embodiment concerns an optically variable piezochromic element, wherein the pigment is a, preferably magnetic, optically variable pigment, consisting of non-transparent, reflective flakes, which are of the order of 1 micrometer thick and have a planar extension of the order of 10 to 50 micrometers, and whose spectrally selective reflectivity (color) depends on the viewing angle with respect to the plane of the flake. "Optically variable", in the context of the present disclosure, means having a viewing- or incident-angle dependent color.

Preferably, the optically variable pigment flakes are magnetic or magnetizable flakes, so as to allow for their orientation in the coating composition through the application of an external magnetic field, prior to hardening it to an elastic solid.

Upon application of a moderate pressure, a stretching or a shearing force, such as can be exerted by a human finger, to the cured elastic composition comprising the optically variable flakes, the flakes subjected to the pressure change their orientation within the elastic composition, which results in a local, highly visible color change. Upon release of the pressure, the stretching or the shearing force, the flakes immediately return into their former positions, i.e. the pressure-dependent color change is rapid and fully reversible.

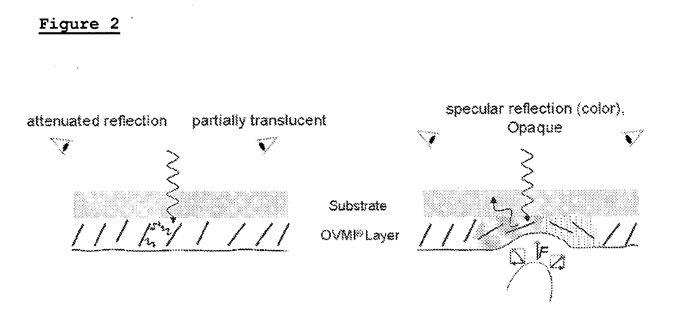

The effect of mechanical compression on a collection of oriented pigment flakes comprised in an elastic coating is illustrated in Fig. 2: At the place of compression of the elastic coating, the pigment flakes adopt a lower angle towards the plane of the coating, thus showing an enhanced specular reflection.

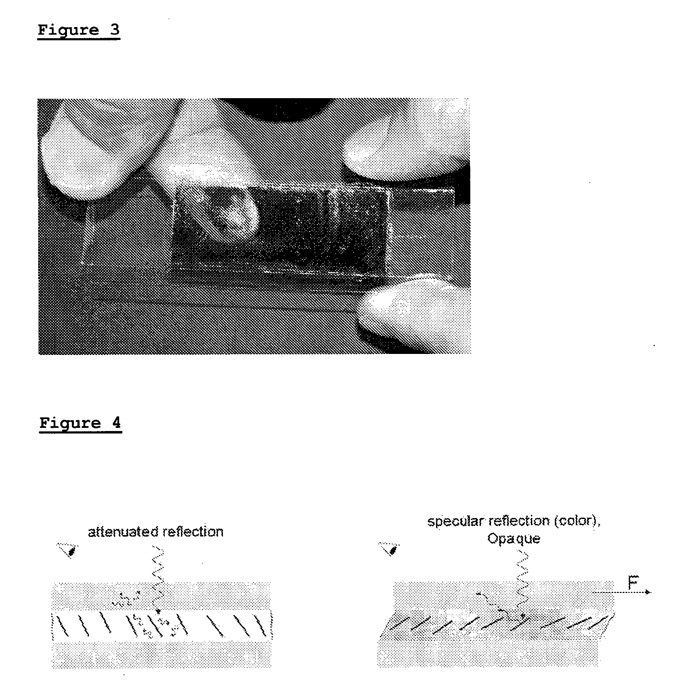

The effect of mechanical elongation on a collection of oriented pigment flakes comprised in an elastic coating is illustrated in Fig. 4: In the elongated elastic coating, the flakes adopt a lower angle towards the plane of the coating, and thus show enhanced specular reflection.

In a preferred embodiment, the coating composition containing the optically contrasting pigment particles is used as a security element on a substrate such as a value document, a banknote, an identity document, an access- or a banking card, or on a label serving for tax collection purposes.

Preferably, the piezochromic security element is covered by an at least partially transparent polymer foil, which is preferably applied before the curing operation. This allows for protecting the elastic coating from being inadvertently or intentionally scratched away. Said foil may also be the over-laminating foil of a creditor access card, or of a transportation title, which may have the additional function of protecting the sensitive information on these documents from being tampered. Said foil can also be part of a stamping foil assembly.

As obvious to the skilled person, there may be, depending on the application, a need for additional layers between the piezochromic security element and the said polymer foil, such as for promoting adhesion, for providing release properties, or for still other technical and/or esthetical purposes.

In a particularly preferred embodiment of the security device, the elastic coating composition containing the flakes is comprised between two polymer foils, at least one of which being at least partially transparent. This allows for applying the verification pressure, e.g. by a human finger, from a first side of the security device, whilst observing the resulting color change from the second side of the security device, i.e. the foil / elastic coating / foil assembly.

Such foil / elastic coating / foil assemblies may be used on banknotes in the form of security threads, windows or affixed stamping foils. For application as a security thread, the foil assembly is cut into elongated stripes, which are incorporated into security paper during the papermaking, as known to the skilled in the art. In order to observe the visible effect of pressure, the security thread must not be buried entirely within the paper, but exposed in some parts, such as is the case with a window-thread (see EP-A-0 400 902). For application as a window, the foil assembly is either used as the base layer of the security document, which carries an opacifying coating where no window is to appear (see WO 98/13211), or, alternatively, incorporated into the paper during the papermaking process, as known to the skilled in the art (see EP-A-0 860 298). For application as a stamping foil, the foil assembly is produced on a releasable carrier foil, and preferably provided with a heat-activatable glue layer, as known to the skilled person (see WO 92/00855).

Disclosed is as well a process for making a reversibly piezochromic security element for the forgery-protection of value documents, the process comprising the steps of
a) providing a substrate;
b) applying a coating composition comprising a collection of optically contrasting pigment particles in a liquid or pasty polymerizable precursor monomer or oligomer to at least part of the substrate;
c) curing the coating composition to an elastic polymer.

In a preferred embodiment of the process, the optically variable flake pigment is a magnetic or magnetizable pigment, and step b) comprises the magnetic orienting of said flake pigment in the applied coating with the help of an external magnetic field.

Said magnetic orienting is preferably performed using an engraved plate of magnetized permanent magnetic material, such as disclosed in WO 2005/002866 and WO 2008/046702.

The process may also include the additional step of covering the applied coating composition by an at least partially transparent polymer foil.

The substrate used in the process may further be an at least partially transparent polymer foil.

The security element according to the invention can be used for the counterfeit protection of a security document or item, such as a value document, a banknote, an identity document, an access-card, a banking card, or a label serving for tax collection or other purposes.

Further disclosed is a security document or item, such as a value document, a banknote, an identity document, an access-card, a banking card, or a label serving for tax collection or other purposes, carrying a security element according to the present invention.

### Detailed description

### Polymer

Preferably, the polymer binder used to comprise the pigment is a high molecular weight elastic polymer, which allows for a fully reversible, elastic change of dimensions under the influence of external pressure or force, such that the original dimensions are restored after removal of the pressure or force quickly or almost instantaneously at room temperature.

The polymers which can be used as the elastic binder, to embody the piezochromic security element, include but are not limited to highly flexible polymers such as natural and synthetic rubbers including styrene-butadiene copolymer, acryl ate latex systems, polychloroprene (neoprene), nitrile rubber, butyl rubber, polysulfide rubber, cis-1,4 polyisoprene, ethylene-propylen terpolymers (EPDM rubber), silicone rubber and polyurethane rubber, porous silicones, as well as other suitable polymers disclosed in the art.

In order to obtain a maximum of visible effect upon compression or elongation of the pigment-containing elastic polymer, it is of advantage to use non-spherical pigment particles, such as needles or flakes, and in particular, to produce an orientation of the pigment particles in the elastic binder matrix.

The position orientations of the pigment particles in the elastic binder must subsequently be fixed through a curing of the binder, so as to adopt the elastic state. A rapid curing system is of advantage, and UV- or EB (electron beam) curing coating compositions are correspondingly preferred, because they allow an immediate *in situ* fixation of the pigment particles subsequent to the coating process.

However, thermally curing elastic polymer systems, such as 2-component silicones, can also be employed; in this case, the orientation of the pigment particles must be maintained during the initial stages of the thermal curing process, through external forces, such as a magnetic field, until the polymer is sufficiently solidified to maintain the pigment particles in place and orientation.

Furthermore, for health and environmental reasons, it is of advantage to keep the solvent content of the coating composition low. Therefore, solvent-less formulations are a preferred option.

### Pigment incorporation

The pigment concentration in the coating composition should be chosen such that a maximum of visible effect is produced upon application of a moderate pressure, such as possible with a fingertip. In case of a flake pigment, e.g. the optically variable pigment flakes disclosed in US 4,838,648, the pigment concentration should be chosen such that a maximum surface coverage would be obtained in the printed film if the flake particles were to align horizontally after printing, i.e. with their large surface parallel to the imprinted substrate surface. For obtaining a maximum visible effect, the pigment particles are preferably oriented close to vertically with respect to the substrate plane.

Flake-shaped thin-film optical interference pigments which can be used to embody the present invention are described in US 4,705,300; US 4,705,356; US 4,721,271 and thereto related disclosures.

Magnetic optically variable pigments, allowing for a magnetic orientation of the pigment particles by the means of an external magnetic field, have been disclosed in WO 02/073250; US 4,838,648; EP-A-686675; WO 03/00801 and US 6,838,166.

On the other hand, the pigment concentration should not be excessively high, in order to allow the flake pigment to rotate, such as to yield a good visible contrast between the compressed and the released state of the flake-pigment containing elastic polymer. The optimum concentration of the flake pigment in the elastic polymer depends on the particular pigment properties such as the particle size and the specific weight, as well as of coating parameters such as the final coating thickness, and should therefore be determined *ad casum* by the skilled person so to obtain the best visual effect in each application. The optimal pigment concentration is generally somewhere between 1 and 30 weight percent of the ink, in most cases between 5 and 15 wt%.

The mean particle size and the size distribution in a particular pigment lot have an influence on the achievable result. A rather large particle size (flake diameter in the range of 10 to 50µm) and a size distribution as homogenous as possible are required for obtaining an optimum effect. However, the larger the flake diameter, the thicker the coating must be to allow for a vertical orientation of the pigment in the coating film.

The coating composition comprising the flake pigment particles is preferably applied onto a rigid substrate surface via a liquid-ink printing technique, such as screen-printing or bar-coating. The final thickness of the applied and hardened coating layer is highly depending on the used pigment and is preferably of the order of 50 µm or higher, so as to allow for the easy rotation of the pigment flakes to adopt a vertical position.

Any orientation of the pigment flakes in a position which is substantially different from an alignment in the plane of the film or coating layer will exhibit a certain color change upon the application of pressure. However, the color change is strongest with the pigment particles disposed in the elastic polymer in a position close to vertical with respect to the substrate plane. It is further not advisable to use, for this particular application, a coating thickness which is much less than the diameter of the pigment flakes.

Materials and technology for the orientation of magnetic particles in coating compositions, as well as corresponding printing processes, have been disclosed in US 2,418,479; US 2,570,856; US 3,791,864; DE 2006848-A; US 3,676,273; US 5,364,689; US 6,103,361; US 2004/0051297; US 2004/0009309; EP-A-710508, WO 02/090002; WO 03/000801; WO 2005/002866, US 2002/0160194; WO 2006/061301; WO 2006/117271; WO 2007/131833; WO 2008/009569; WO 2008/046702.

The coating composition can further comprise other types of pigments and/or dyes; thus it may noteworthy comprise non-magnetic optically variable pigments, additive-color-mixing pigments, iridescent pigments, liquid crystal polymer pigments, metallic pigments, magnetic pigments, UV-, visible- or IR-absorbing pigments, UV-, visible- or IR-luminescent pigments, UV-, visible- or IR-absorbing or luminescent dyes, as well as mixtures thereof. The coating composition may further comprise forensic taggants, e.g. as disclosed in EP-B-0 927 750.

The reversible piezochromic security element of the present invention is now further illustrated by the figures and by the following, non limiting examples.
**Fig. 1** schematically depicts the alignment of optically variable magnetic pigment flakes in an elastic coating with the help of an external magnetic field.
**Fig. 2** schematically depicts the origin of the optical effect resulting from an elastic deformation due to compression of a coating comprising oriented flake pigments.
**Fig. 3** illustrates the effect of finger pressure on the optical properties of a coating comprising oriented optically variable magnetic pigments, as seen through a glass plate carrying the coating.
**Fig. 4** schematically depicts the origin of the optical effect resulting from an elastic deformation due to elongation of a coating comprising oriented flake pigments.
**Fig. 5** illustrates the effect of elongation on the optical properties of a coating comprising oriented optically variable magnetic pigment: **a)** without stretch; **b)** under stretch.
**Fig. 6** schematically depicts an application of the pressure sensitive coating of the present invention as security element on an ID-card.

### Example 1: Optically variable magnetic pigment in a 2-component silicon elastomer.

A coating composition for producing a pressure-sensitive optically variable security element according to the present invention was formulated by dispersing optically variable magnetic pigment particles in the heat curable solvent-less 2-component silicon elastomer *Sylgard 527 Primerless Silicone Dielectric Gel* (Dow Coming).

The two components of *Sylgard 527* were thoroughly mixed at room temperature in a 0.9:1.1 by weight ratio. The *Sylgard 527* gel comes as a kit, comprising components A and B in separate containers. The two components are typically mixed in a ratio of 1:1 by weight. A somewhat firmer gel can be obtained by increasing the ratio of part B to Part A in the initial mixture.

Subsequently, magnetic optically variable pigment (Flex Products Inc., Santa Rosa, CA, "green-to blue", 5-layer design Cr/MgF₂/Ni/MgF₂/Cr, as disclosed in US 4,838,648) was dispersed in the *Sylgard 527* mixture at a concentration of 10 wt-%, and the pigment-containing coating composition was deposited at about 100 µm thickness with the help of a coating bar (hand-coater) onto a transparent polymer foil (100 µm PVC from Puetz-Folien) or onto a glass plate (microscopy slide).

The so obtained films were pre-dried on a hot plate for 5 min at 80°C, in order to increase the viscosity of the *Sylgard 527* binder. The pigment particles in the coating were then oriented to a close to vertical position with respect to the substrate plane, using a "plastoferrite" magnet such as described in WO 2008/046702 A1. The resulting film appeared homogenously grey and partly transparent. The film was kept on the magnet until the viscosity of the *Sylgard* binder was high enough to retain the positions and orientations of the pigment particles comprised in it, and was then cured in an oven for 30 minutes at 150°C. The cured film was highly flexible and showed a mechanically resilient behavior. In order to protect the so obtained film against mechanical damage (scratching), it was covered with a transparent self adhesive foil.

Upon compressing the elastic film between a fingertip and the substrate, a clear and fully reversible color change from dark grey to bright green was observed from the back side of the substrate (Fig. 3).

### Example 2: Optically variable magnetic pigment in a UV-curable dielectric gel.

A coating composition for producing a pressure-sensitive optically variable security element according to the present invention was formulated by dispersing optically variable magnetic pigment particles in the UV-curable 1-component solventless silicon dielectric gel *X3-6211 Encapsulant* (Dow Coming).

The same magnetic optically variable pigment as in example 1 was dispersed in the Silicon gel X3-6211 at a concentration of 7.5 wt-%, and the pigment-containing coating composition was deposited at about 100 µm thickness with a coating bar (hand-coater) onto a transparent polymer foil (100 µm PVC from Puetz-Folien) or onto a glass plate (microscopy slide).

The pigment particles in the *X3-6211* binder were then orientated so as to form an angle close to 60° with respect to the substrate plane, using a magnet such as described in WO 2008/046702 A1, and dried in-situ using a conventional UV-radiation curing unit as known in the art.

The cured film was highly flexible and had a resilient behavior. In order to protect the film against mechanical damage, it was covered with a transparent self adhesive foil.

Upon compressing the elastic film between a fingertip and the glass plate, a reversible clear change from dark grey to bluish green was observed.

### Example 3: Light diffractive pigment in a 2-component silicon elastomer

A coating composition for producing a pressure-sensitive security element according to the present invention was formulated by dispersing an aluminium flake pigment in the heat curable solvent-less 2-component silicon elastomer *Sylgard 527 Primerless Silicone Dielectric Gel* (Dow Corning) as described in example 1.

The SpectraFlair pigment Silver 1500-20 (FLEX Products, JDSU, California) was dispersed in the *Sylgard 527* mix at a concentration of 8 wt-%, and the pigment-containing coating composition was deposited at about 100 µm thickness with the help of a coating bar (hand-coater) onto a glass plate (microscopy slide).

The obtained films were cured in an oven for 30 minutes at 150°C and was then covered with a transparent self adhesive foil. When compressing the elastic film between a fingertip and the substrate, a change from silver to multiple, bright rainbow colors was observed from the back side of the substrate.

### Example 4: Effects of stretching an elastic coating comprising oriented optically variable pigment flakes.

A coating composition for producing a shear force-sensitive security element according to the present invention was formulated by incorporating optically variable magnetic pigment particles in the UV-curable 1-component solvent-less silicon dielectric gel *X3-6211 Encapsulant* (Dow Coming) as described in example 2.

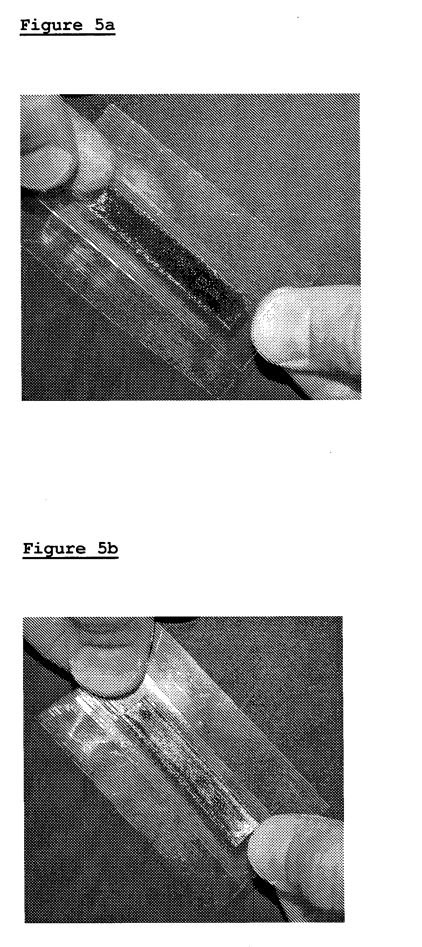

A band of the dispersion was deposited at about 100 µm thickness with the help of a coating bar (hand-coater) onto a transparent polymer foil (100 µm PVC from Puetz-Folien). After orientation of the pigment particles close to vertical with respect to the substrate plane, the film was partly dried by UV curing and a second polymer foil was put on the film surface to form a sandwich-like arrangement. The elastic film was then further cured with UV. Fig. 5a illustrates the unstretched, oriented coating between 2 flexible substrates, which has a dark grey appearance. Fig. 5b shows the effect of mechanical stretching on the coating of Fig. 5a: a clear and fully reversible color change from dark grey to bright green is observed.

### Example 5: Application example of an optically variable magnetic pigment in a UV-curable dielectric gel.

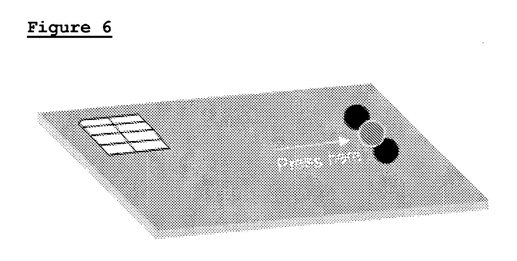

The pressure sensitive coating composition descried in example 2 can for example be used as security element on an ID card, as illustrated in Figure 6. The manufacturing of the plastic card typically includes the 4 steps of i) plastic compounding/molding of the of the core sheet, ii) printing, iii) lamination and iv) cutting/embossing. In order to obtain a two-side pressure sensitive feature, three circles were cut, as indicated, into a core plastic sheet following the molding step i), and filled with a pressure sensitive coating composition prepared as given in example 2. After UV curing of the pressure sensitive coating, the plastic core sheet was over-laminated on both sides with each a transparent foil. The card can otherwise be processed as usual (printing, cutting etc.).

The pressure sensitive element of this plastic card shows a clear shift from dark to green when touched from the back while observing from the front side. Alternatively, the middle circle on the front side can be touched to induce, through mechanical transmission of pressure by the laminated cover layer, a color shift from dark to green in the outer 2 circles when observed from the front side.

The given examples illustrate how a piezochromic security element can be produced through the orientation and fixation of flake-like pigment particles within a highly flexible and resilient elastic polymer layer, which is preferably produced through the application of a solventless and UV-curable precursor material. Depending on the thickness of the elastic polymer layer, optimized optical effects are obtained with pigment concentrations between 5 and 15 wt-%. Improved effects are obtained with relatively thick films; the achievable thickness is, however, limited by process factors of the printing process and by the drying limitations.

Based on the information given in the description and in the examples, the skilled in the art will be able to derive further embodiments of the disclosed invention.

## Claims

1. Reversibly piezochromic security element for the forgery-protection of value documents, the security element being **characterized in that** it comprises a collection of optically contrasting pigment particles in a film or a coating layer of an elastic polymer, wherein at least part of the pigment particles are selected from the group consisting of the needle-shaped and the plate- or flake-shaped particles.

2. Coating composition for the production of a reversibly piezochromic security element, for the forgery-protection of value documents, the coating composition being **characterized in that** it comprises a collection of optically contrasting pigment particles in a liquid or pasty polymerizable precursor monomer or oligomer, able to be cured to an elastic polymer, **characterized in that** at least part of the pigment particles are selected from the group consisting of the needle-shaped and the plate- or flake-shaped particles.

3. Security element according to Claim 1 or coating composition according to 2, wherein at least part of the pigment particles are selected from the group consisting of the thin film interference pigment particles.

4. Security element or coating composition according to one of Claims 1 to 3, wherein at least part of the pigment particles are selected from the group of the optically variable pigment particles.

5. Security element or coating composition according to one of Claims 1 to 4, wherein at least part of the pigment particles comprise a Fabry-Perot reflector / dielectric / absorber layer structure.

6. Security element or coating composition according to one of Claims 1 to 5, wherein at least part of the pigment particles are flakes with diameter in the range of between 10 and 50 micrometers.

7. Security element or coating composition according to one of Claims 1 to 6, wherein at least part of the pigment particles are selected from the group of the magnetic or magnetizable pigment particles.

8. Security element or coating composition according to one of Claims I to 7 wherein the pigment particles are present in the film or coating layer in a concentration of between 5 and 25 wt-%, preferably of between 10 and 15 wt-%.

9. Security element according to one of claims 1 to 8, wherein at least part of the pigment particles are oriented in a position which is substantially different from an alignment in the plane of the film or coating layer.

10. Security element according to claim 9, wherein at least part of the pigment particles are close to vertically oriented with respect to the plane of the substrate, such that the needle-axis of needle-shaped particles is within 30 °from the normal to the plane, respectively that the flake-axis of flake shaped particles is within 30° from the plane of the film or coating.

11. Security element according to one of claims 1 to 10, wherein the elastic polymer is chosen either from the group of the highly flexible polymers consisting of the natural rubbers, the synthetic rubbers including the styrenebutadiene copolymers, the acrylate latex systems, the polychloroprenes (neoprene), the nitrile rubbers, the butyl rubbers, the Polysulfide rubbers, the cis-1,4 polyisoprenes, the ethylene-propylen terpolymers (EPDM rubbers), the silicone rubbers, the polyurethane rubber, and the porous sili-cones, or from the group consisting of the UV-curing and the electron-beam-curing polymers.

12. Security element according to one of claims 1 to 10, wherein the elastic polymer is a two-component silicon elastomer, or a one-component silicon dielectric gel.

13. Security element according to one of claims 1 to 12, **characterized in that** the film of elastic polymer containing the pigment particles is covered by an at least partially transparent protecting film.

14. Security element according to one of claims 1 to 12, **characterized in that** the film of elastic polymer containing the pigment particles is comprised between two at least partially transparent protecting films.

15. Process for making a reversibly piezochromic security element according to one of claims 1 to 14, for the forgery-protection of value documents, the process comprising the steps of
a) providing a substrate;
b) applying a coating composition, comprising a collection of optically contrasting pigment particles in a liquid or pasty polymerizable precursor monomer or oligomer, to at least part of the substrate;
c) curing the coating composition to an elastic polymer.

16. Process according to claim 15, **characterized in that** said optically variable flake pigment is a magnetic or magnetizable pigment, and that step b) comprises the magnetic orienting of said flake pigment in the applied coating with the help of an external magnetic field.

17. Process according to claim 16, **characterized in that** said magnetic orienting is performed using an engraved plate of magnetized permanent magnetic material.

18. Process according to one of claims 15 to 17, **characterized in that** the coating composition is covered by an at least partially transparent polymer foil.

19. Process according to one of claims 15 to 18, **characterized in that** the substrate is an at least partially transparent polymer foil.

20. Use of a security element according to one of claims 1 to 14 for the counterfeit protection of a security document or item, said security document or item is preferably chosen from the group consisting of the value documents, the banknotes, the identity documents, the access-cards, the banking cards, and the label serving for tax collection purposes.

21. Security document carrying a security element according to one of claims I to 14.

## Patentansprüche

1. Reversibel piezochromes Sicherheitselement zum Fälschungsschutz von Wertdokumenten, wobei das Sicherheitselement **dadurch gekennzeichnet ist, dass** es eine Sammlung optisch in Kontrast stehender Pigmentpartikel in einem Film oder einer Beschichtungsschicht aus einem elastischen Polymer umfasst, worin zumindest ein Teil der Pigmentpartikel aus der Gruppe bestehend aus nadelförmigen und plättchen- oder flockenförmigen Partikeln ausgewählt ist.

2. Beschichtungszusammensetzung für die Herstellung eines reversibel piezochromen Sicherheitselements für den Fälschungsschutz von Wertdokumenten, wobei die Beschichtungszusammensetzung **dadurch gekennzeichnet ist, dass** sie eine Sammlung optisch in Kontrast stehender Pigmentpartikel in einem flüssigen oder pastenartigen polymerisierbaren Vorläufermonomer oder -oligomer, das zu einem elastischen Polymer gehärtet werden kann, umfasst, **dadurch gekennzeichnet, dass** zumindest ein Teil der Pigmentpartikel aus der Gruppe bestehend aus nadelförmigen und plättchen- oder flockenförmigen Partikeln ausgewählt ist.

3. Sicherheitselement gemäß Anspruch 1 oder Beschichtungszusammensetzung gemäß Anspruch 2, worin mindestens ein Teil der Pigmentpartikel aus der Gruppe bestehend aus Dünnfilm-Interferenz-Pigmentpartikeln ausgewählt ist.

4. Sicherheitselement oder Beschichtungszusammensetzung gemäß einem der Ansprüche 1 bis 3, worin zumindest ein Teil der Pigmentpartikel aus der Gruppe der optisch variablen Pigmentpartikel ausgewählt ist.

5. Sicherheitselement oder Beschichtungszusammensetzung gemäß einem der Ansprüche 1 bis 4, worin zumindest ein Teil der Pigmentpartikel eine Fabry-Perot-Reflektor/Dielektrikum/Absorber-Schichtstruktur umfasst.

6. Sicherheitselement oder Beschichtungszusammensetzung gemäß einem der Ansprüche 1 bis 5, worin zumindest ein Teil der Pigmentpartikel Flocken mit einem Durchmesser im Bereich von zwischen 10 und 50 Mikrometer ist.

7. Sicherheitselement oder Beschichtungszusammensetzung gemäß einem der Ansprüche 1 bis 6, worin zumindest ein Teil der Pigmentpartikel aus der Gruppe bestehend aus magnetischen oder magnetisierbaren Pigmentpartikeln ausgewählt ist.

8. Sicherheitselement oder Beschichtungszusammensetzung gemäß einem der Ansprüche 1 bis 7, worin die Pigmentpartikel im Film oder der Beschichtungsschicht in einer Konzentration von zwischen 5 und 25 Gew.%, vorzugsweise zwischen 10 und 15 Gew.% vorhanden sind.

9. Sicherheitselement gemäß einem der Ansprüche 1 bis 8, worin zumindest ein Teil der Pigmentpartikel in einer Position orientiert sind, die sich wesentlich von einer Ausrichtung in der Ebene des Films oder der Beschichtungsschicht unterscheidet.

10. Sicherheitselement gemäß Anspruch 9, worin zumindest ein Teil der Pigmentpartikel nahezu vertikal in Bezug auf die Ebene des Substrats orientiert sind, so dass die Nadelachse von nadelförmigen Partikeln innerhalb von 30° von der Normalen auf die Ebene liegt, bzw. die Flocken-Achse von flockenförmigen Partikeln innerhalb von 30° von der Ebene des Films oder der Beschichtung liegt.

11. Sicherheitselement gemäß einem der Ansprüche 1 bis 10, worin das elastische Polymer entweder aus der Gruppe der hochflexiblen Polymere, bestehend aus natürlichen Kautschuks, synthetischen Kautschuks einschließlich Styrol-Butadien-Copolymeren, Acrylatlatexsystemen, Polychloroprenen (Neopren), Nitrilkautschuks, Butylkatuschuks, Polysulfidkautschuks, cis-1,4-Polyisoprenen, Ethylen-Propylen-Terpolymeren (EPDM-Kautschuks), Silikonkautschuks, Polyurethankautschuks und porösen Silikonen, oder aus der Gruppe bestehend aus UV-härtenden und Elektronenstrahl-härtenden Polymeren ausgewählt ist.

12. Sicherheitselement gemäß einem der Ansprüche 1 bis 10, worin das elastische Polymer ein Zweikomponenten-Silikonelastomer oder ein einkomponentiges dielektrisches Silikongel ist.

13. Sicherheitselement gemäß einem der Ansprüche 1 bis 12, **dadurch gekennzeichnet, dass** der Film aus elastischem Polymer, der die Pigmentpartikel enthält, durch einen zumindest teilweise transparenten Schutzfilm bedeckt ist.

14. Sicherheitselement gemäß einem der Ansprüche 1 bis 12, **dadurch gekennzeichnet, dass** der Film des elastischen Polymers, der die Pigmentpartikel enthält, zwischen zwei zumindest teilweise transparenten Schutzfilmen eingeschlossen ist.

15. Verfahren zur Herstellung eines reversibel piezochromen Sicherheitselements gemäß einem der Ansprüche 1 bis 14 für den Fälschungsschutz von Wertdokumenten, wobei das Verfahren die Schritte umfasst:
a) Bereitstellen eines Substrats;
b) Auftragen einer Beschichtungszusammensetzung, die eine Sammlung optisch in Kontrast stehender Pigmentpartikel in einem flüssigen oder pastenförmigen polymerisierbaren Vorläufermonomer oder -oligomer umfasst, auf zumindest einen Teil des Substrats;
c) Härten der Beschichtungszusammensetzung zu einem elastischen Polymer.

16. Verfahren gemäß Anspruch 15, **dadurch gekennzeichnet, dass** das optisch variable Flockenpigment ein magnetisches oder magnetisierbares Pigment ist, und dass Schritt b) das magnetische Orientieren des Flockenpigments in der aufgetragenen Beschichtung mit Hilfe eines externen Magnetfelds umfasst.

17. Verfahren gemäß Anspruch 16, **dadurch gekennzeichnet, dass** das magnetische Orientieren unter Verwendung einer Gravurplatte aus magnetisiertem permanentmagnetischem Material durchgeführt wird.

18. Verfahren gemäß einem der Ansprüche 15 bis 17, **dadurch gekennzeichnet, dass** die Beschichtungszusammensetzung durch eine zumindest teilweise transparente Polymerfolie bedeckt ist.

19. Verfahren gemäß einem der Ansprüche 15 bis 18, **dadurch gekennzeichnet, dass** das Substrat eine zumindest teilweise transparente Polymerfolie ist.

20. Verwendung eines Sicherheitselements gemäß einem der Ansprüche 1 bis 14 für den Fälschungsschutz eines Sicherheitsdokuments oder -gegenstands, worin das Sicherheitsdokument oder der Gegenstand vorzugsweise aus der Gruppe bestehend aus Wertdokumenten, Banknoten, Identitätsdokumenten, Zugangskarten, Bankkarten und Etiketten für Steuererhebungszwecke ausgewählt ist.

21. Sicherheitsdokument, das ein Sicherheitselement gemäß einem der Ansprüche 1 bis 14 trägt.

## Revendications

1. Elément piézochrome de sécurité réversible pour la protection des documents de valeur contre la contrefaçon, l'élément de sécurité étant **caractérisé en ce qu'**il comprend une collection de particules de pigment optiquement contrastant dans un film ou une couche de revêtement d'un polymère élastique, où au moins une partie des particules de pigment est choisie dans le groupe constitué des particules en forme d'aiguille et en forme de plaque ou de paillette.

2. Composition de revêtement pour la production d'un élément piézochrome de sécurité réversible, pour la protection des documents de valeur contre la contrefaçon, la composition de revêtement étant **caractérisée en ce qu'**elle comprend une collection de particules de pigment optiquement contrastant dans un monomère ou oligomère précurseur polymérisable pâteux ou liquide, pouvant être durci en un polymère élastique, **caractérisée en ce qu'**au moins une partie des particules de pigment est choisie dans le groupe constitué des particules en forme d'aiguille et en forme de plaque ou de paillette.

3. Elément de sécurité selon la revendication 1 ou composition de revêtement selon la revendication 2, dans lequel/laquelle au moins une partie des particules de pigment est choisie dans le groupe constitué des particules de pigments d'interférence en film mince.

4. Elément de sécurité ou composition de revêtement selon l'une des revendications 1 à 3, dans lequel/laquelle au moins une partie des particules de pigment est choisie dans le groupe des particules de pigment optiquement variable.

5. Elément de sécurité ou composition de revêtement selon l'une des revendications 1 à 4, dans lequel/laquelle au moins une partie des particules de pigment comprend une structure de couche réfléchissante/absorbante/diélectrique de Fabry-Pérot.

6. Elément de sécurité ou composition de revêtement selon l'une des revendications 1 à 5, dans lequel/laquelle au moins une partie des particules de pigment représente des paillettes ayant un diamètre se situant dans la plage comprise entre 10 et 50 micromètres.

7. Elément de sécurité ou composition de revêtement selon l'une des revendications 1 à 6, dans lequel/laquelle au moins une partie des particules de pigment est choisie dans le groupe des particules de pigment magnétique ou magnétisable.

8. Elément de sécurité ou composition de revêtement selon l'une des revendications 1 à 7, dans lequel/laquelle les particules de pigment sont présentes dans le film ou dans la couche de revêtement en une concentration comprise entre 5 et 25% en poids, de préférence comprise entre 10 et 15% en poids.

9. Elément de sécurité selon l'une des revendications 1 à 8, dans lequel/laquelle au moins une partie des particules de pigment est orientée dans une position qui est essentiellement différente d'un alignement dans le plan du film ou de la couche de revêtement.

10. Elément de sécurité selon la revendication 9, dans lequel au moins une partie des particules de pigment est presque orientée verticalement par rapport au plan du substrat, de sorte que l'axe d'aiguille des particules en forme d'aiguille soit à moins de 30° par rapport à la normale au plan, respectivement que l'axe de paillette des particules en forme de paillette soit à moins de 30° par rapport au plan du film ou du revêtement.

11. Elément de sécurité selon l'une des revendications 1 à 10, dans lequel le polymère élastique est choisi soit dans le groupe des polymères hautement flexibles constitués des caoutchoucs naturels, des caoutchoucs synthétiques comportant les copolymères styrène-butadiène, les systèmes de latex acrylate, les polychloroprènes (néoprène), les caoutchoucs nitrile, les caoutchoucs butyle, les thioplastes, les cis-1,4 polyisoprènes, les terpolymères d'éthylène-propylène (des caoutchoucs EPDM), les caoutchoucs de silicone, le caoutchouc polyuréthane, et les silicones poreuses, et dans le groupe constitué des polymères durcis par UV et des polymères durcis par faisceau d'électrons.

12. Elément de sécurité selon l'une des revendications 1 à 10, dans lequel le polymère élastique est un élastomère de silicone à deux composants, ou un gel de silicone diélectrique à un seul composant.

13. Elément de sécurité selon l'une des revendications 1 à 12, **caractérisé en ce que** le film de polymère élastique contenant les particules de pigment est recouvert par un film de protection au moins partiellement transparent.

14. Elément de sécurité selon l'une des revendications 1 à 12, **caractérisé en ce que** le film de polymère élastique contenant les particules de pigment est compris entre deux films de protection au moins partiellement transparents.

15. Processus de fabrication d'un élément de sécurité piézochrome réversible selon l'une des revendications 1 à 14, pour la protection des documents de valeur contre la contrefaçon, le processus comprenant les étapes consistant :
a) à fournir un substrat ;
b) à appliquer une composition de revêtement, comprenant une collection de particules de pigment optiquement contrastant dans un monomère ou oligomère précurseur polymérisable pâteux ou liquide, à au moins une partie du substrat ;
c) à durcir la composition de revêtement en un polymère élastique.

16. Processus selon la revendication 15, **caractérisé en ce que** ledit pigment en paillette optiquement variable est un pigment magnétique ou magnétisable, et **en ce que** l'étape b) comprend le fait d'effectuer une orientation magnétique dudit pigment en paillette dans le revêtement appliqué à l'aide d'un champ magnétique externe.

17. Processus selon la revendication 16, **caractérisé en ce que** ladite orientation magnétique est effectuée en utilisant une plaque gravée de matériau magnétique permanent magnétisé.

18. Processus selon l'une des revendications 15 à 17, **caractérisé en ce que** la composition de revêtement est recouverte par une feuille polymère au moins partiellement transparente.

19. Processus selon l'une des revendications 15 à 18, **caractérisé en ce que** le substrat est une feuille polymère au moins partiellement transparente.

20. Utilisation d'un élément de sécurité selon l'une des revendications 1 à 14 pour la protection contre la contrefaçon d'un document ou article de sécurité, ledit document ou article de sécurité est de préférence choisi dans le groupe constitué des documents de valeur, des billets de banque, des documents d'identité, des cartes d'accès, des cartes bancaires, et de l'étiquette servant à des fins de collecte de taxes.

21. Document de sécurité portant un élément de sécurité selon l'une des revendications 1 à 14.
